# FASCICULE DE BREVET EUROPEEN

(11) **EP 0 932 271 B1**
(45) Date de publication et mention de la délivrance du brevet: **25.10.2006**
(21) Numéro de dépôt: 99400086.7
(22) Date de dépôt: 14.01.1999
(51) Int. Cl.: H04L 1/18, H04L 29/06

(54) **Procédé de communication avec acquittement de réception amélioré**
Kommunikationsverfahren mit verbesserter Empfangsquittierung
Communication method with improved reception acknowledgement

(30) Priorité: 16.01.1998 FR 9800450
(43) Date de publication de la demande: 28.07.1999
(73) Titulaire: STMicroelectronics S.A., 92120 Montrouge (FR)
(72) Inventeur: Gaultier, Jean-Marie, 75116 Paris (FR)
(74) Mandataire: Ballot, Paul Denis Jacques

(56) Documents cités:
- GB-A- 1 428 050
- CHENG W Y ET AL: "ILLINET - A 32 MBITS/SEC. LOCAL-AREA NETWORK" AFIPS CONFERENCE PROCEEDINGS - 1981 NATIONAL COMPUTER CONFERENCE, CHICAGO, ILLINOIS, 4 - 7 mai 1981, pages 209-214, XP002104193 AFIPS Press, Arlington, Virginia, US
- YASUI K ET AL: "AN AUTOMATIC-REPEAT REQUEST POLICY FOR A DATA TRANSMISSION SYSTEM WITH THREE TYPES OF ERROR PROBABILITIES" ELECTRONICS & COMMUNICATIONS IN JAPAN, PART III - FUNDAMENTAL ELECTRONIC SCIENCE, vol. 79, no. 4, 1 avril 1996, pages 43-51, XP000621236
- CARLSON D E: "BIT-ORIENTED DATA LINK CONTROL PROCEDURES" IEEE TRANSACTIONS ON COMMUNICATIONS, vol. COM-28, no. 4, avril 1980, pages 455-467, XP002077256
- HAYASHIDA Y ET AL: "GO-BACK-N SYSTEM WITH LIMITED RETRANSMISSIONS" PROCEEDINGS OF THE ANNUAL INTERNATIONAL PHOENIX CONFERENCE ON COMPUTERS AND COMMUNICATIONS, SCOTTSDALE, MAR. 22 - 24, 1989, no. CONF. 8, 22 mars 1989, pages 183-187, XP000040917 INSTITUTE OF ELECTRICAL AND ELECTRONICS ENGINEERS

## Description

La présente invention se rapporte à un procédé de communication entre une unité maîtresse et une unité esclave. C'est un procédé de communication performant en ce sens qu'il utilise un protocole avec un acquittement amélioré lors de la réception d'un message. L'invention s'applique dans le domaine des transmissions numériques.

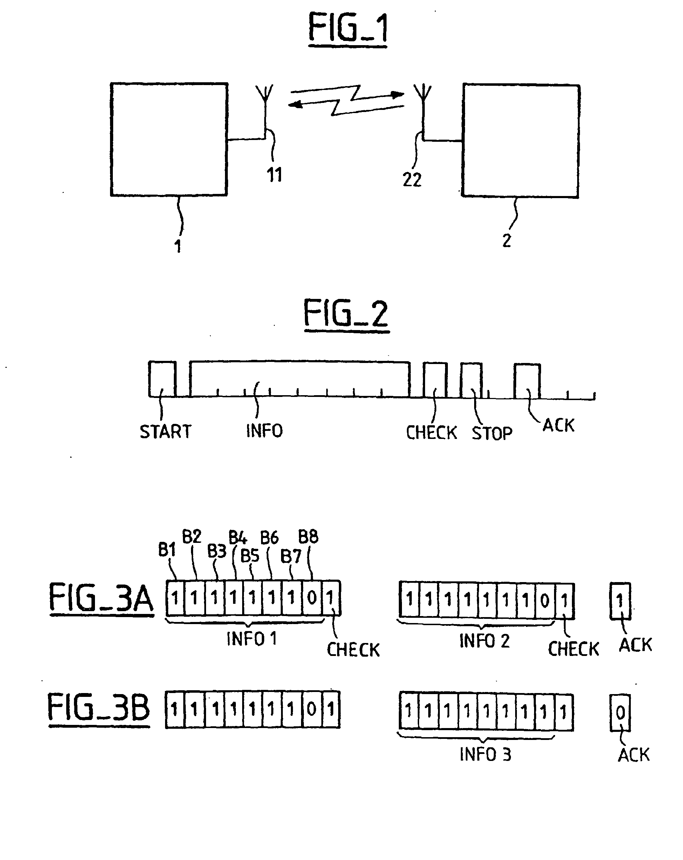

Ces transmissions numériques peuvent s'effectuer au moyen de différents supports. Les canaux de transmission peuvent en effet être soit une liaison filaire soit une fibre optique ou encore un volume d'air compris entre deux antennes. La figure 1 représente un exemple de communication par liaison radio fréquence. Sur cette figure, une unité maîtresse 1 échange des messages via une antenne émettrice/réceptrice 11 avec une unité esclave 2 également équipée d'une antenne émettrice/réceptrice 22. Le canal de transmission est ici constitué par le volume d'air compris entre les deux antennes 11 et 22.

L'unité maîtresse et l'unité esclave peuvent toutes deux alternativement émettre ou recevoir des messages à destination ou en provenance de l'autre unité. L'unité maîtresse se distingue de l'unité esclave en ce sens que c'est l'unité maîtresse qui prend l'initiative de la communication. L'unité maîtresse peut ainsi être par exemple, l'unité centrale d'un ordinateur. L'unité esclave peut alors être un de ces périphériques, comme une imprimante commandée à distance au moyen d'un canal de transmission quelconque.

Dans l'état de la technique, on connaît des procédés de communication consistant à émettre des messages comportant un mot d'information utile et un ou plusieurs bits de service. La transmission est réalisée en série selon un protocole de communication déterminé. Un tel protocole spécifie le format et la syntaxe des messages qui sont transmis par l'unité maîtresse vers l'unité esclave, ou réciproquement. La transmission s'effectue de manière synchrone. Elle est séquencée à un rythme déterminé, les unités comportant des moyens connus pour se caler sur le rythme d'une même horloge ou de deux horloges synchrones ou dia-synchrones.

A la figure 2, on a représenté un exemple assez simple d'un format de message élémentaire connu. Le message élémentaire comporte tout d'abord un bit de démarrage START qui a pour fonction de synchroniser l'horloge de l'unité destinatrice avec le message reçu.

Ensuite, le message élémentaire comporte un mot d'information utile INFO, par exemple codé sur huit bits (un octet). Ce mot peut être un mot d'instruction, dont la valeur indique la nature d'une commande, à réaliser par l'unité destinatrice. Cette instruction peut par exemple être un ordre de lecture ou d'écriture. Il peut également s'agir d'un mot d'adresse, dont la valeur indique l'adresse ou une partie de l'adresse d'un emplacement mémoire de l'unité destinatrice. A cet emplacement mémoire de l'unité destinatrice, une donnée peut être, par exemple, lue ou écrite. Enfin, il peut également s'agir d'un mot de donnée, dont la valeur indique la valeur d'une donnée traitée par l'unité destinatrice.

Le message élémentaire comporte encore un bit de contrôle CHECK qui peut notamment être un bit de contrôle de parité. La valeur du bit de contrôle de parité CHECK est fixée à la valeur logique 1 ou 0. Cette valeur est déterminée de telle façon que la somme des valeurs des bits du mot d'information utile INFO donne une valeur paire ou impaire selon le type de parité adopté. Le rôle du bit de contrôle de parité CHECK est de permettre à l'unité destinatrice de détecter d'éventuelles erreurs de transmission. Dans un tel cas, l'unité destinatrice peut éventuellement solliciter une ré-émission du message.

Enfin, en l'état de la technique, le message comporte un bit STOP de fin de transmission. Ce bit sert uniquement à indiquer la fin du message élémentaire.

A la suite de ce bit de fin de transmission STOP, chaque protocole prévoit généralement un certain nombre d'unités temporelles élémentaires, pendant lesquelles l'unité d'émission n'émet plus aucun bit sur le canal de transmission. Ainsi, le canal de transmission est laissé libre pour que l'unité destinatrice émette un bit d'acquittement ACK de la communication. La valeur logique de ce bit d'acquittement ACK indique si le message a été correctement reçu.

Le moyen essentiel dans l'état de la technique pour voir si le message élémentaire a été correctement reçu, est le contrôle effectué à l'aide du bit de contrôle de parité CHECK. Sur la figure 2, quatre de ces unités temporelles élémentaires faisant suite au bit STOP sont représentées. Une de ces unités temporelles est occupée par le bit d'acquittement de réception ACK.

On connaît aujourd'hui dans les systèmes électroniques une quantité très importante de protocoles de communication différents. Andrew S.Tonenbaum décrit dans son livre "Computer Networks" les protocoles ARQ les plus connus: "Stop and wait", "Go-back-N" et "selective repeat". Chaque protocole est adapté à des contraintes spécifiques de telle ou telle application (taille des mots à transmettre, contrôle de cohérence, sécurisation contre les interventions passives ou actives de personnes mal attentionnées, mode d'acquittement, durée maximale d'une émission compte tenu du débit numérique, etc.). Au sein d'un même système, l'unité maîtresse et l'unité esclave se conforment évidemment à un même protocole de communication pour pouvoir communiquer intelligiblement.

Les informations relatives au protocole de communication, développées par les fabricants de systèmes électroniques, font en général l'objet d'une large diffusion. Ces fabricants permettent ainsi à d'autres fabricants d'incorporer ces systèmes dans des ensembles plus complexes, ou d'en développer de nouvelles applications industrielles et/ou commerciales.

Il en résulte, au regard de l'ampleur que prennent les communications utilisant de tels protocoles, que l'intégrité et le rendement des informations transmises doivent être optimaux. En d'autres termes, il faut que la transmission soit entâchée d'un minimum d'erreurs. Il existe d'ailleurs des applications où l'intégrité et le rendement des informations échangées sont des contraintes importantes du cahier des charges. Dans l'état de la technique, le contrôle de la qualité de la transmission des signaux binaires réside essentiellement dans l'analyse et l'interprétation de la valeur du bit de contrôle de parité CHECK mentionné précédemment.

Les figures 3A et 3B représentent deux cas de transmissions possibles. Ces figures illustrent la détermination du bit de parité CHECK. Pour ces exemples on a gardé le format de message tel que celui présenté à la figure 2. On ne se soucie pas dans ces figures de la valeur des bits de démarrage START et de fin de transmission STOP. On ne s'intéresse ici qu'aux valeurs des bits du mot d'information utile INFO, du bit de contrôle de parité CHECK et du bit d'acquittement ACK.

La figure 3A représente le cas d'un mot d'information utile INFO1 dont la transmission n'a pas été erronée. On choisit arbitrairement, de donner la valeur logique 1 à sept premiers bits B1, B2, B3, B4, B5, B6, B7, du mot d'information utile INFO1. Un dernier bit B8, du mot d'information utile INFO1 est fixé à la valeur logique 0. Si on choisit d'adopter un type de parité dit paire, le bit de contrôle de parité CHECK prendra alors la valeur logique 1. En effet, la somme des valeurs des huit bits du mot d'information utile INFO1 ajoutée à la valeur du bit de parité CHECK donne le nombre 8. Ce résultat est conforme au type de parité choisi. Dans le cas de la figure 3A, la transmission du mot d'information utile INFO1 n'a pas subi de dommages. Un mot d'information utile INFO2, qui est le mot résultant de la transmission du mot d'information utile INFO1, présente par conséquent les mêmes valeurs binaires pour chacun des bits.

En général, un circuit constitué de portes logiques élémentaires permet de vérifier que le résultat de la transmission du mot d'information utile est conforme à ce qui était attendu au regard de la valeur du bit de contrôle de parité et selon le type de parité adopté.

Le bit d'acquittement a la valeur témoignant d'une réception correcte.

Sur les figures 3A et 3B, un acquittement correct correspond arbitrairement à la valeur 1 du bit d'acquittement ACK.

La figure 3B, représente le cas du même mot d'information utile INFO1 reçu avec une erreur de transmission. Un mot d'information utile INFO3 est reçu dans l'unité de réception suite à l'émission du mot d'information utile INFO1. Sur la figure 3B, le huitième bit B8 du mot d'information utile INFO3 est différent du huitième bit du mot d'information utile INFO1. La transmission a donc été erronée, et le mot d'information utile INFO3 n'est alors plus en adéquation avec le bit de contrôle de parité CHECK. Il en aurait été de même si trois, cinq ou sept des huit bits constituant le mot d'information utile INFO3 avaient été différents des bits correspondants au mot d'information utile INFO1. En effet, dans tous ces cas, la somme des huit bits du mot d'information utile INFO3, ajoutée à la valeur du bit de contrôle de parité CHECK, donne un nombre impair alors que le type de parité est un type de parité dit "parité paire". Par conséquent, sur la figure 3B, le bit d'acquittement ACK a la valeur 0.

La transmission d'un message comporte trois ou quatre phases de réception et d'émission selon qu'on est un mode lecture ou écriture. L'ordre de ces phases est important.

Pour une opération d'écriture, une séquence de transmission d'un message se décompose par exemple en quatre phases de transmission qui correspondent pour chacune à la transmission d'un message élémentaire contenant un mot d'information utile de type différent. En mode écriture, la première phase de transmission est la transmission d'un code relatif à une instruction à exécuter. La seconde phase de la transmission est la transmission des bits de poids faible de l'adresse mémoire à laquelle on veut écrire une donnée. La troisième phase de la transmission est la transmission des bits de poids fort de cette même adresse mémoire. Enfin, la quatrième phase de la transmission est la transmission des bits constituant la donnée à écrire à cette adresse mémoire.

Pour une opération de lecture, une séquence de transmission d'un message se décompose en trois phases de transmission qui correspondent pour chacune à la transmission d'un message élémentaire contenant un mot d'informàtion utile de type différent. Ces trois phases de transmission sont les trois premières phases décrites lors de la description du déroulement de la séquence type d'une opération d'écriture.

Dans l'état de la technique, lorsqu'une erreur est détectée par un test portant sur le bit de contrôle de parité, la séquence de transmission est reprise à sa première phase de transmission du message, quel que soit la phase de transmission courante. Il en résulte que, même si les premières phases de la transmission avaient été correctement acquittées, ces phases de transmission doivent subir à nouveau tout le processus de transmission. Ceci pose des problèmes de rendement de la transmission.

L'objet de la présente invention est de pallier cet inconvénient. Un acquittement de réception permet, selon l'invention, une ré-émission de la phase courante de la séquence de transmission. En particulier, l'invention propose la mise en oeuvre d'un compteur permettant de compter le nombre de ré-émission d'une même phase de transmission. Au bout d'un nombre prédéterminé de ré-émission de la même phase de la séquence de transmission, le compteur est réinitialisé et la séquence de transmission est de nouveau effectuée depuis sa première phase de transmission.

D'une façon générale, l'invention propose un procédé de communication entre une unité maîtresse et une unité esclave, du type consistant à transmettre des messages constitués de messages élémentaires, chaque message élémentaire comportant un mot d'information utile d'un type déterminé, par exemple une instruction, une adresse ou une donnée, et des bits de service, caractérisé en ce que les messages élémentaires comprennent des unités temporelles élémentaires pour recevoir un mot d'acquittement composé d'au moins deux bits de réception émis par l'unité esclave dont la valeur est significative du message élémentaire suivant à transmettre.

En substance, on introduit ainsi dans le protocole lui-même un moyen amélioré pour déterminer la phase d'émission suivante dans une séquence de transmission. Le bit de réception, ou les bits de réception, indiquent dans une application préférée de l'invention, l'acquittement de la réception d'un message élémentaire.

Les caractéristiques et avantages essentiels de la présente invention apparaîtront de façon plus détaillés à la lecture de la description d'un exemple préféré de réalisation qui va suivre. Celle-ci est purement illustrative, et doit être lue en regard des dessins annexés sur lesquels on a représenté :
- à la figure 1 : déjà analysée, une unité maîtresse et une unité esclave aptes à échanger des messages;
- à la figure 2 : également déjà analysée, un exemple de format connu d'un message élémentaire;
- aux figures 3A et 3B : également déjà analysées, différents cas de figures illustrant la fonction du bit de contrôle de parité;
- à la figure 4 : un exemple de format selon l'invention, d'un message élémentaire;
- à la figure 5 : un organigramme de programme pour la mise en oeuvre du procédé selon l'invention, à l'émission d'un message;
- à la figure 6 : un organigramme de programme pour la mise en oeuvre du procédé selon l'invention, à la réception d'un message;
- à la figure 7: un dispositif pour la mise en oeuvre dù procédé selon l'invention.

On a vu lors de la description de la figure 2 que les protocoles prévoient généralement un certain nombre d'unités temporelles élémentaires pendant lesquelles une unité d'émission n'émet plus aucun bit sur le canal de transmission. Le canal de transmission est ainsi laissé libre pour que l'unité destinatrice émette un bit d'acquittement de la communication. En fonction de la valeur logique de ce bit d'acquittement, le message élémentaire émis est considéré comme correctement reçu ou comme reçu de façon erronée.

Dans le premier cas, on passe à la phase suivante de la séquence d'émission du message. Dans le second cas on réitère la totalité de la séquence d'émission du message. Le bit d'acquittement ne renvoie donc qu'une information purement binaire.

L'invention présente une amélioration du rôle de ce bit d'acquittement. L'objectif de cette amélioration est de provoquer chez l'unité d'émission soit l'émission de la phase suivante de la séquence d'émission du message, soit la ré-émission de la dernière phase émise de la séquence d'émission du message, soit la ré-émission de la totalité de la séquence d'émission du message.

Dans une première application, l'invention propose de tenir compte d'une part de la valeur du bit d'acquittement ACK, et d'autre part de sa position dans les unités temporelles élémentaires laissées libres par l'unité d'émission. Le bit d'acquittement est alors porteur d'une information plus riche qu'une information binaire.

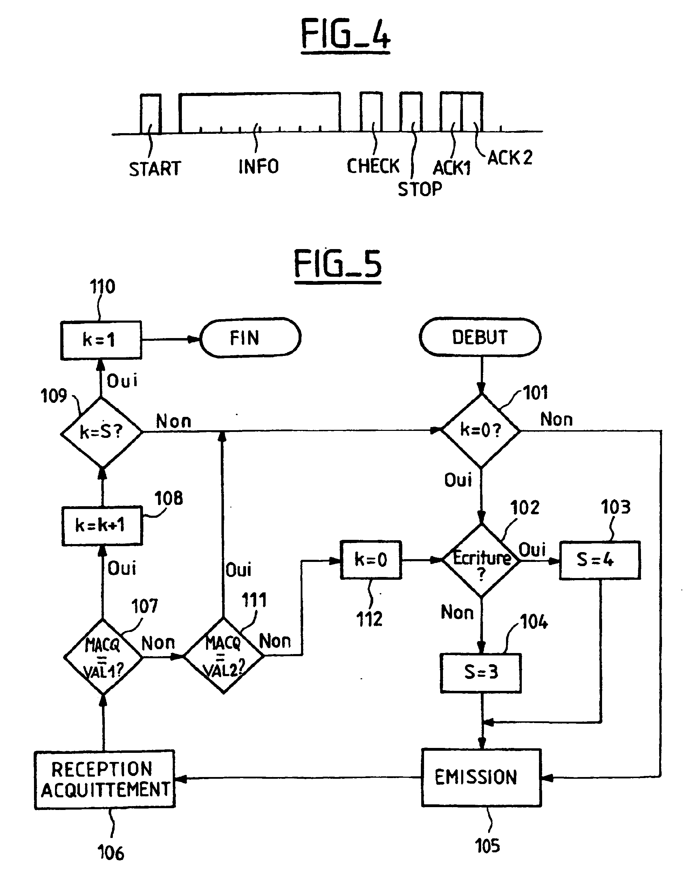

Le format de message élémentaire selon un exemple préféré de l'invention est représenté à la figure 4. Ce format de message élémentaire est conforme à celui de l'art antérieur représenté à la figure 2, sauf en ce que chaque message comprend deux bits ACK1 et ACK2 d'acquittement de réception. Ces deux bits ACK1 et ACK2 constituent un mot d'acquittement de réception MACK. Chaque message élémentaire est donc pourvu de deux bits d'acquittement constituant ainsi un mot d'acquittement. Par conséquent, le mot d'acquittement peut véhiculer une information plus riche qu'une simple information binaire. Ils permettent d'informer l'unité d'émission sur la phase de la séquence d'émission du message qui doit être émise.

A la figure 5, on a représenté un organigramme d'un programme pour la mise en oeuvre d'un procédé selon l'invention à l'émission d'un message. Sur cette figure on a utilisé les indices suivants :
- une lettre k qui désigne un indice pouvant prendre une valeur de 0 à 4. Cet indice est significatif de la phase courante de la séquence d'émission;
- une lettre S qui détermine dans tous les cas, le nombre de phase dans la séquence d'émission;
- des valeurs VAL1, VAL2 et VAL3 qui désignent les différentes valeurs que peuvent prendre le mot d'acquittement MACK. La valeur VAL1 signifie que la réception a été correctement acquittée au regard du bit de contrôle de parité. La valeur VAL2 signifie que la réception n'a pas été correctement acquittée au regard du bit de contrôle de parité, mais que l'on souhaite reprendre la séquence d'émission à la phase courante de la séquence d'émission. Le dernier message élémentaire émis est alors émis de nouveau. Enfin, la valeur VAL3 correspond à la valeur prise par le mot d'acquittement lorsque la réception n'a pas été correctement acquittée et que l'on souhaite reprendre l'émission à partir de la première phase de la séquence d'émission du message.

Dans une première étape 101, après le début du programme, un test est effectué pour savoir si l'on se trouve dans la première phase de la séquence d'émission. La valeur de k est alors 0. Si la réponse est oui, alors le mot d'information utile est nécessairement une instruction de commande. Un test 102 permet alors de vérifier, grâce à un décodage des bits du mot d'information utile, si le mot d'information utile correspond à une instruction d'écriture. Si la réponse est oui, alors l'entier naturel S prend dans une étape 103 la valeur 4. Si la réponse est non, c'est-à-dire si l'instruction est un ordre de lecture, l'entier naturel S prend dans une étape 104 la valeur 3.

Une fois le nombre de phases de la séquence d'émission déterminé, le message est effectivement émis dans une étape 105. Suite à cette étape 105, une étape 106 consiste en la réception du mot d'acquittement MACK. Puis vient une étape 107, qui est un test visant à vérifier, en fonction de la valeur du mot MACK, si la dernière émission a été correctement acquittée par l'unité de réception.

Si l'émission a été correctement acquittée par l'unité de réception, l'indice k est incrémenté d'une unité dans l'étape 108. Suite à cette étape 108, vient une étape 109 qui est un test visant à vérifier si la valeur de l'indice k a atteint la valeur de l'entier S précédemment fixée. Si la réponse est positive, la séquence d'émission est achevée. Dans une étape 110, l'indice k est alors réinitialisé à la valeur 0. C'est la fin du programme. Si la réponse au test 109 est négative, la boucle du programme reprend à partir de l'étape 101.

Dans le cas où la réponse au test 107, qui est le test permettant de vérifier si l'émission a été correctement acquittée, est négative, un test 111 est effectué.

Ce test 111 effectue la comparaison entre le mot d'acquittement MACK à la valeur VAL2. S'il y a coïncidence entre ces deux valeurs, le programme reprend à l'étape 101. Nous sommes alors dans le cas de figure où l'émission n'a pas été correctement acquittée et où on réitère la phase courante de la séquence d'émission du message.

Dans le cas où la réponse au test 111 est négative on réinitialise la variable k à la valeur 0 dans une étape 112, et on reprend le programme au test 102. Ce dernier cas de figure correspond en effet à une réception non correctement acquittée et à une reprise de la séquence d'émission à la première phase de cette séquence d'émission.

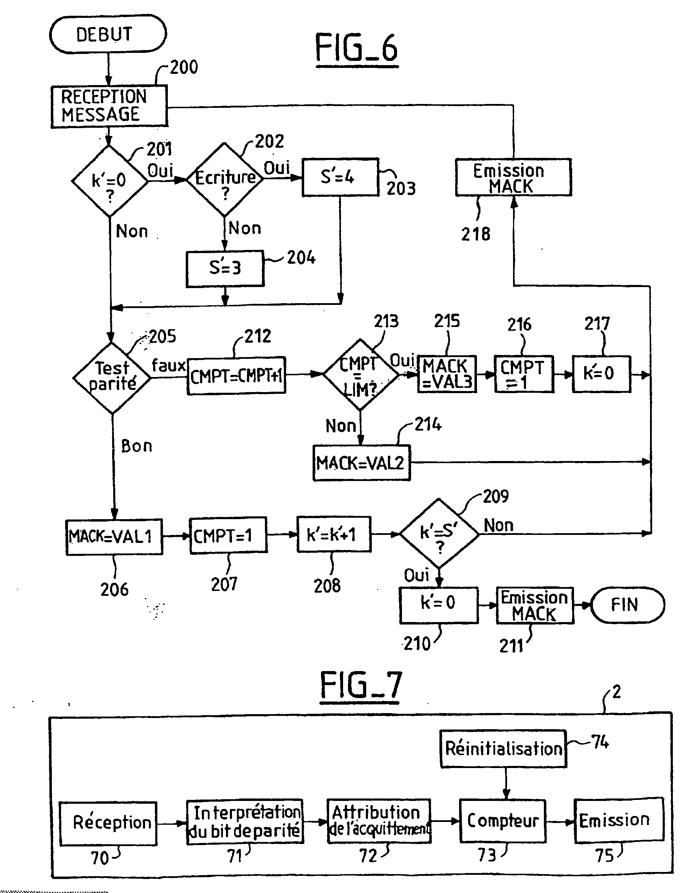

A la figure 6, on a représenté l'organigramme d'un programme pour la mise en oeuvre du procédé selon l'invention lors de la réception d'un message.

On introduit dans cette figure des variables k' et S' qui sont des entiers naturels dont les rôles sont identiques aux variables k et S présentes à la figure 5. Une variable CMPT est présente dans l'organigramme de la figure 6. Elle permet de compter le nombre d'émission successive d'une même phase de la séquence d'émission d'un message. Une constante LIM est également introduite. Cette constante est arbitrairement choisie. Cette constante LIM permet de limiter le nombre d'émission successive d'une même phase d'une séquence d'émission à la valeur qui lui a été attribuée.

Dans une première étape 200, après le début du programme, le message émis par l'unité d'émission est reçu. Dans une étape 201, qui fait suite à la première étape 200, un test est effectué pour savoir si on se trouve dans la première phase de la séquence de réception, c'est à dire si k'=0. Si la réponse est oui, alors le mot d'information utile est nécessairement une instruction de commande. Un test 202 permet alors de vérifier, par un décodage des bits du mot d'information utile, si le mot d'information utile correspond à une instruction d'écriture. Si la réponse est oui, alors l'entier naturel S' prend dans une étape 203 la valeur 4. Si la réponse est non alors l'entier naturel S' prend dans une étape 204 la valeur 3.

A l'issue de l'étape 204, ou à l'issue de l'étape 202 si la réponse au test 201 est négative, un test de parité 205 est effectué.

Si le test de parité 205 s'avère bon, selon le principe précédemment exposé, une étape 206 attribue la valeur VAL1 au mot d'acquittement MACK. Puis dans une étape 207, la variable CMPT est réinitialisée à 1. Faisant suite à cette étape 207, vient une étape 208 dans laquelle l'indice k' est incrémenté d'une unité. On effectue ensuite un test 209, qui compare les entiers k' et S'. Si ces valeurs sont égales, c'est-à-dire si la séquence de réception est à sa dernière phase, alors l'indice k' est réinitialisé à 0 dans une étape 210, et le mot d'acquittement correct, dont la valeur est VAL1, est émis dans une étape 211. La fin du programme est alors atteinte.

Si le test de parité 205 a révélé une erreur de transmission, la variable CMPT est incrémentée d'une unité dans une étape 212. Suite à l'étape 212, vient un test 213, où la variable CMPT est comparée à la constante LIM. Si ces deux valeurs sont différentes, on attribue dans une étape 214 la valeur VAL2 au mot d'acquittement MACK. Une ré-émission du dernier message élémentaire émis est ainsi sollicitée. Ce mot d'acquittement est émis dans une étape 218.

Si les valeurs des variables CMPT et LIM sont égales, on attribue dans une étape 215 la valeur VAL3 au mot d'acquittement MACK. Suite à cette étape 215, viennent alors deux étapes 216 et 217, dans lesquelles on réinitialise la variable CMPT à la valeur 1 et la variable k' à la valeur 0. L'émission du mot d'acquittement MACK est alors effectuée dans l'étape 218. Une ré-émission de la totalité de la séquence d'émission du message est ainsi sollicitée. Ainsi, en cas d'une transmission non correctement acquittée, la transmission du dernier message élémentaire transmis est sollicitée un certain nombre de fois avant que la transmission soit reprise au premier message élémentaire du message courant.

Dans tous les cas, l'étape 218 replace l'exécution du programme à l'étape 200 qui est la réception d'une phase de la séquence d'émission.

A la figure 7, on a représenté schématiquement un dispositif pour la mise en oeuvre du procédé selon l'invention.

L'unité esclave 2 comprend une unité de réception 70 pour recevoir un message élémentaire, et des moyens 71 pour analyser la cohérence du message élémentaire reçu au regard de la valeur du bit de contrôle de parité. Ces moyens 71, peuvent être un circuit à base de portes logiques élémentaires.

En outre, des moyens d'attribution 72 affectent le bit de réception approprié ACK ou, le cas échéant, le mot de réception approprié MACK. Un compteur 73 est incrémenté si une ré-émission est sollicitée. Ce compteur 73 peut être réinitialisé pas des moyens de réinitialisation 74 après un certain nombre de réémissions du même message élémentaire.

Enfin, l'unité esclave 2 comprend une unité d'émission 75 pour émettre le bit de réception ACK ou, le cas échéant, le mot de réception MACK approprié.

## Revendications

1. Procédé de communication entre une unité d'émission (1) et une unité destinatrice (2), l'unité d'émission étant une unité maîtresse et l'unité destinatrice une unité esclave, ledit procédé comprenant :
- la transmission d'un message constitué d'une pluralité de messages élémentaires de l'unité maîtresse d'émission vers l'unité esclave destinatrice, chaque message élémentaire comportant un mot d'information utile (INFO) et au moins un bit de contrôle (CHECK) ;
- la prévision d'une pluralité d'unités temporelles élémentaires après la transmission de chaque message élémentaire, pendant lesquelles l'unité maîtresse d'émission ne transmet plus ;
- la réception par l'unité maîtresse d'émission d'un mot d'acquittement émis par l'unité esclave destinatrice pendant ladite pluralité d'unités temporelles élémentaires;
ledit procédé étant **caractérisé en ce que** le mot d'acquittement est composé d'au moins deux bits de réception (ACK1, ACK2), dont la valeur permet de provoquer, soit la transmission du message élémentaire suivant à transmettre, soit la retransmission du dernier message élémentaire transmis, soit la retransmission de la totalité des messages élémentaires dudit message.

2. Procédé selon la revendication 1, **caractérisé en ce que** les bits de réception (ACK1, ACK2) acquittent la réception du message élémentaire.

3. Procédé selon la revendication 1 ou 2, **caractérisé en ce que**, en cas de d'une transmission non correctement acquittée, la retransmission du dernier message élémentaire transmis est sollicitée un certain nombre de fois avant que la transmission soit reprise au premier message élémentaire du message courant.

4. Unité d'émission (1) de messages, comprenant des moyens (11) pour transmettre un message constitué d'une pluralité de messages élémentaires comportant chacun un mot d'information utile (INFO) et au moins un bit de contrôle (CHECK), vers une unité destinatrice (2), l'unité d'émission étant une unité maîtresse et l'unité destinatrice étant une unité esclave, des moyens pour prévoir une pluralité d'unités temporelles élémentaires après la transmission de chaque message élémentaire, pendant lesquelles ladite unité maîtresse d'émission ne transmet plus, des moyens de réception (11) d'un mot d'acquittement émis par l'unité esclave destinatrice pendant ladite pluralité d'unités temporelles élémentaires, **caractérisée en ce que** le mot d'acquittement reçu est composé d'au moins deux bits de réception (ACK1, ACK2), dont la valeur permet de provoquer chez ladite unité maîtresse d'émission, soit la transmission du message élémentaire suivant à transmettre, soit la retransmission du dernier message élémentaire transmis, soit la retransmission de la totalité des messages élémentaires dudit message.

5. Unité destinatrice (2) de messages comprenant des moyens de réception (22, 70) d'un message constitué d'une pluralité de messages élémentaires comportant chacun un mot d'information utile (INFO) et au moins un bit de contrôle (CHECK), transmis par une unité d'émission (1), l'unité d'émission étant une unité maîtresse et l'unité destinatrice étant une unité esclave, des moyens (71) pour analyser la cohérence d'un message élémentaire reçu selon la valeur d'un bit de contrôle de parité, des moyens (72) d'attribution d'une valeur à un mot d'acquittement et des moyens (75) d'émission dudit mot d'acquittement vers ladite unité maîtresse d'émission pendant une pluralité d'unités temporelles élémentaires au cours desquelles l'unité maîtresse d'émission est inactive, **caractérisée en ce que** le mot d'acquittement est composé d'au moins deux bits de réception (ACK1, ACK2) dont la valeur permet de provoquer, soit la transmission du message élémentaire suivant à transmettre, soit la retransmission du dernier message élémentaire transmis, soit la retransmission de la totalité des messages élémentaires dudit message.

6. Unité destinatrice selon la revendication 5, **caractérisée en ce qu'**elle comprend un compteur (73) pour compter le nombre de réceptions successives d même message élémentaire et des moyens (74) pou réinitialiser le compteur.

7. Système de communication **caractérisé en ce qu'**il comprend une unité d'émission selon la revendication 4 et une unité destinatrice selon la revendication 5 ou 6.

## Claims

1. A method of communication between a sending unit (1) and an addressee unit (2), the sending unit being a master unit and the addressee unit being a slave unit, said method comprising the following steps:
- transmission of a message constituted by a plurality of elementary messages from the master sending unit to the slave addressee unit, each elementary message comprising a useful information word (INFO) and at least one check bit (CHECK);
- provision of a plurality of elementary temporal units after transmission of each elementary message, during which elementary temporal units the master sending unit no longer emits;
- reception by the master sending unit of an acknowledgement word emitted by the slave addressee unit during said plurality of elementary temporal units;
said method being **characterized in that** the acknowledgement word comprises at least two reception bits (ACK 1, ACK 2) the values of which make it possible to cause either transmission of the next elementary message to be transmitted, or retransmission of the last transmitted elementary message, or retransmission of all elementary messages of said message.

2. The method according to claim 1, **characterized in that** the reception bits (ACK 1, ACK 2) acknowledge reception of the elementary message.

3. The method according to claim 1 or 2, **characterized in that**, in the case of a transmission not properly acknowledged, retransmission of the last elementary message is desired a certain number of times before resuming transmission starting from the first elementary message of the current message.

4. A sending unit (1) for sending messages, said sending unit comprising means (11) for transmitting to an addressee unit (2) a message constituted by a plurality of elementary messages each of which comprises a useful information word (INFO) and at least one check bit (CHECK), the sending unit being a master unit and the addressee unit being a slave unit, means for providing a plurality of elementary temporal units after transmission of each elementary message, wherein said master sending unit no longer emits during said elementary temporal units, means (11) for receiving an acknowledgement word emitted by the slave addressee unit during said plurality of elementary temporal units, **characterized in that** the received acknowledgement word comprises at least two reception bits (ACK 1, ACK 2) the values of which make it possible to cause the master sending unit either to transmit the next elementary message to be transmitted, or to retransmit the last transmitted elementary message, or to retransmit all the elementary messages of said message.

5. An addressee unit (2) for receiving messages, said addressee unit comprising reception means (22, 70) for receiving a message transmitted by a sending unit (1) and constituted by a plurality of elementary messages each of which comprises a useful information word (INFO) and at least one check bit (CHECK), said sending unit being a master unit and said addressee unit being a slave unit, means (71) for analyzing the coherence of an elementary message received with respect to the value of a parity check bit, means (72) for assigning a value to an acknowledgement word, and means (75) for sending said acknowledgement word to said master sending unit during a plurality of elementary temporal units during which said master sending unit is inactive, **characterized in that** the acknowledgement word comprises at least two reception bits (ACK 1, ACK 2) the values of which make it possible to cause either transmission of the next elementary message to be transmitted, or retransmission of the last transmitted elementary message, or retransmission of all the elementary messages of said message.

6. The addressee unit according to claim 5, **characterized in that** it comprises a counter (73) for counting the number of successive receptions of a same elementary message and means (74) for resetting said counter.

7. A communication system, **characterized in that** it comprises a sending unit according to claim 4 and an addressee unit according to claim 5 or 6.

## Patentansprüche

1. Verfahren für eine Kommunikationsverbindung zwischen einer Sendeeinheit (1) und einer Zieleinheit (2), wobei die Sendeeinheit eine Haupteinheit und die Zieleinheit eine Nebeneinheit ist, und das Verfahren umfasst:
- die Übertragung einer aus einer Mehrzahl von Elementarmeldungen gebildeten Meldung von der Haupt-Sendeeinheit an die Neben-Zieleinheit, wobei jede Elementarmeldung ein Informations-Nutzwort (INFO) und wenigstens ein Kontrollbit (CHECK) umfasst;
- die Bereitstellung einer Mehrzahl von Zeit-Elementareinheiten nach der Übertragung jeder Elementarmeldung, während der die Haupt-Sendeeinheit nicht mehr überträgt;
- den Empfang eines Bestätigungswortes durch die Haupt-Sendeeinheit, das durch die Neben-Zieleinheit während der Mehrzahl von Zeit-Elementareinheiten gesendet wird;
wobei das Verfahren **dadurch gekennzeichnet ist, dass** das Bestätigungswort aus wenigstens zwei Empfangsbits (ACK1, ACK2) zusammengesetzt ist, deren Wert erlaubt, die Übertragung der im Folgenden zu übertragenden Elementarmeldung, die Rückübertragung der zuletzt übertragenen Elementarmeldung und die Rückübertragung der Gesamtheit der Elementarmeldungen der Meldung herbeiführt.

2. Verfahren nach Anspruch 1, **dadurch gekennzeichnet, dass** die Empfangsbits (ACK1, ACK2) den Empfang der Elementarmeldung bestätigen.

3. Verfahren nach Anspruch 1 oder 2, **dadurch gekennzeichnet, dass** im Falle einer nicht korrekt bestätigten Übertragung die Rückübertragung der zuletzt übertragenen Elementarmeldung einige Male angefordert wird, bevor die Übertragung auf die erste Elementarmeldung der laufenden Meldung zurück gesetzt wird.

4. Sendeeinheit (1) für Meldungen, mit Mitteln (11) zum Übertragen einer Meldung, die aus einer Mehrzahl von Elementarmeldungen gebildet wird, die jeweils ein Informations-Nutzwort (INFO) und wenigstens ein Kontrollbit (CHECK) umfassen, an eine Zieleinheit (2), wobei die Sendeeinheit eine Haupteinheit ist und die Zieleinheit eine Nebeneinheit ist, mit Mitteln zur Bereitstellung einer Mehrzahl von Zeit-Elementareinheiten nach der Übertragung jeder Elementarmeldung, während der die Haupt-Sendeeinheit nicht mehr überträgt, mit Empfangsmitteln (11) für ein Bestätigungswort, das von der Neben-Zieleinheit während der Mehrzahl von Zeit-Elementareinheiten gesendet wird, **dadurch gekennzeichnet, dass** das empfangene Bestätigungswort aus wenigstens zwei Empfangsbits (ACK1, ACK2) zusammengesetzt ist, deren Wert ermöglicht, an der Haupt-Sendeeinheit die Übertragung der im Folgenden zu übertragenden Elementarmeldung, die Rückübertragung der zuletzt übertragenen Elementarmeldung und die Rückübertragung der Gesamtheit der Elementarmeldungen dieser Meldung herbei zu führen.

5. Zieleinheit (2) für Meldungen, mit Empfangsmitteln (22, 70) für eine Meldung, die aus einer Mehrzahl von Elementarmeldungen gebildet wird, die jeweils ein Informations-Nutzwort (INFO) und wenigstens ein Kontrollbit (CHECK) umfassen, die durch eine Sendeeinheit (1) übertragen werden, wobei die Sendeeinheit eine Haupteinheit ist und die Zieleinheit eine Nebeneinheit ist, mit Mitteln (71) zum Analysieren der Kohärenz einer empfangenen Elementarmeldung mit dem Wert eines Paritäts-Kontrollbits, mit Mitteln (72) zur Zuordnung eines Wertes zu einem Bestätigungswort und mit Mitteln (75) zum Senden des Bestätigungswortes an die Haupt-Sendeeinheit während einer Mehrzahl von Zeit-Elementareinheiten, in deren Verlauf die Haupt-Sendeeinheit inaktiv ist, **dadurch gekennzeichnet, dass** das Bestätigungswort aus wenigstens zwei Empfangsbits (ACK1, ACK2) zusammengesetzt ist, deren Wert ermöglicht, die Übertragung der im Folgenden zu übertragenden Elementarmeldung, die Rückübertragung zuletzt übertragenen Elementarmeldung und die Rückübertragung der Gesamtheit der Elementarmeldungen dieser Meldung herbei zu führen.

6. Zieleinheit nach Anspruch 5, **dadurch gekennzeichnet, dass** diese einen Zähler (73) umfasst, um die Anzahl von aufeinander folgenden Empfängen derselben Elementarmeldung zu zählen, und Mittel (74), um den Zähler zu reinitialisieren.

7. Kommunikationssystem, **dadurch gekennzeichnet, dass** dieses eine Sendeeinheit nach Anspruch 4 und eine Zieleinheit nach Anspruch 5 oder 6 umfasst.
